# EUROPÄISCHE PATENTSCHRIFT

(11) **EP 3 127 772 B1**
(45) Veröffentlichungstag und Bekanntmachung des Hinweises auf die Patenterteilung: **23.09.2020**
(21) Anmeldenummer: 16179939.0
(22) Anmeldetag: 18.07.2016
(51) Int. Cl.: B60W 50/04, B60T 17/22, B60W 30/18, B60W 50/038, B60W 50/00

(54) **STEUERN EINER VERZÖGERUNGSEINRICHTUNG EINES KRAFTFAHRZEUGS**
CONTROL OF A DECELERATION DEVICE OF A MOTOR VEHICLE
COMMANDE D'UN DISPOSITIF RALENTISSEUR DE VEHICULE AUTOMOBILE

(30) Priorität: 06.08.2015 DE 102015215042
(43) Veröffentlichungstag der Anmeldung: 08.02.2017
(73) Patentinhaber: Volkswagen Aktiengesellschaft, 38440 Wolfsburg (DE); AUDI AG, 85045 Ingolstadt (DE)
(72) Erfinder: Blumentritt, Marc, 38102 Braunschweig (DE); Schwindl, Martin, 80339 München (DE); Jilg, Stefan, 85055 Ingolstadt (DE)

(56) Entgegenhaltungen:
- WO-A1-2014/094772
- DE-A1- 10 248 195
- DE-A1-102014 209 483

## Beschreibung

Die Erfindung betrifft ein Verfahren zum Steuern einer Verzögerungseinrichtung eines Kraftfahrzeugs. Die Verzögerungseinrichtung kann beispielsweise einen elektrisch steuerbarer Bremskraftverstärker einer Reibbremse und/oder einen Generator zum Rekuperieren von Bewegungsenergie des Kraftfahrzeugs umfassen. Die Verzögerungseinrichtung wird durch eine Steuervorrichtung in Abhängigkeit von einem Anforderungssignal einer Fahrzeugkomponente angesteuert. Mit dem Anforderungssignal fordert die Fahrzeugkomponente eine Fahrzeugverzögerung des Kraftfahrzeugs an, durch welche das Kraftfahrzeug abgebremst wird. Zu der Erfindung gehören auch die Steuervorrichtung sowie ein Kraftfahrzeug mit der erfindungsgemäßen Steuervorrichtung.

Bei einem Kraftfahrzeug kann ein Abbremsvorgang nicht nur durch den Fahrer mittels des Bremspedals, sondern auch durch ein Fahrassistenzsystem, FAS, ausgelöst werden. Beispielsweise kann eine Notbremsung durch eine Kollisionsüberwachung eines Notbremsassistenzsystems ausgelöst werden. Ein Abbremsvorgang mittels beispielsweise einer Motorbremse kann durch ein Steuergerät für eine ACC (automatic cruise control) angefordert werden, um eine Fahrgeschwindigkeit des Kraftfahrzeugs auf eine Sollgeschwindigkeit einzuregeln. Innerhalb eines Fahrassistenzsystems können unterschiedliche Fahrfunktionen jeweils eigene Anforderungssignale für eine Fahrzeugverzögerung erzeugen. Aus diesem Grund ist im Folgenden nicht von Fahrassistenzsystemen allgemein, sondern von Fahrzeugkomponenten die Rede, wobei jede Fahrzeugkomponente ein ganzes Fahrassistenzsystem oder ein Programmodul oder eine Programmfunktion innerhalb eines Fahrassistenzsystems sein kann.

Mehrere Fahrzeugkomponenten können parallel aktiv sein, ohne voneinander zu wissen, das heißt ohne sich gegenseitig zu koordinieren. Um zu entscheiden, welches Anforderungssignal zu einem gegebenen Zeitpunkt in der Verzögerungseinrichtung umgesetzt wird, ist eine Steuervorrichtung für die Verzögerungseinrichtung vorgesehen, die eine Kommunikationsschnittstelle aufweist, über welche die Anforderungssignale empfangen werden. Diese Steuervorrichtung wird auch als Bremssteuergerät bezeichnet. Die Schnittstelle kann beispielsweise an einem Kommunikationsbus bereitgestellt werden, beispielsweise einem CAN-Bus (CAN - controller area network) oder einem FlexRay-Bus. Wird ein Anforderungssignal einer Fahrzeugkomponente empfangen, so wird durch die Steuervorrichtung ein Abbremsvorgang eingeleitet, indem bei der Verzögerungseinrichtung die Fahrzeugverzögerung in Abhängigkeit von dem Anforderungssignal eingestellt wird.

Ein Problem bei Fahrzeugkomponenten, die eine Fahrzeugverzögerung auslösen können, ist deren Zuverlässigkeit oder Integrität. Wird beispielsweise durch eine Kollisionsüberwachung ein falscher Alarm ausgelöst, so kann ein Anforderungssignal für eine Vollbremsung in den Stillstand erzeugt werden, obwohl es keinen Anlass dafür gibt. Um solche Fehlanforderungen zu vermeiden, muss eine Fahrzeugkomponente, die einen solchen drastischen Abbremsvorgang auslösen kann, einer Mindestintegritätsstufe genügen, die beispielsweise durch den sogenannten ASIL (automotive safety integrity level) gemäß des Standards ISO 26262 beschrieben sein kann. Bei einem Steuergerät für eine ACC geht man davon aus, dass dieses keine derart drastischen Fahrzeugverzögerungen anfordern wird. Aus diesem Grund muss ein solches Steuergerät nur einer niedrigeren oder geringeren Integritätsstufe genügen. Erzeugt aber ein solches Steuergerät aufgrund eines technischen Defekts dennoch ein Anforderungssignal für einen gefährlichen Abbremsvorgang, so wird dieses Anforderungssignal durch die Steuervorrichtung der Verzögerungseinrichtung umgesetzt, sodass durch einen technischen Defekt eines Steuergeräts für eine ACC dennoch z.B. eine Vollbremsung ausgelöst werden könnte. Da das Steuergerät für die ACC nur einer niedrigeren Integritätsstufe genügen muss, bleiben entsprechende technische Defekte oder Konstruktionsdefizite bei der Herstellung und Prüfung eines solchen Steuergeräts mit einer größeren Wahrscheinlichkeit unentdeckt.

Aus der gattungsgemäßen DE 10 2014 209 483 A1 ist ein Verfahren zum Steuern einer Verzögerungseinrichtung eines Fahrzeugs bekannt, wobei durch eine Steuereinrichtung zu Beginn eines Abbremsvorgangs ein Anforderungssignal einer Fahrzeugkomponente in Form eines Notbremssystems für die Fahrzeugverzögerung empfangen wird. Der Fahrzeugkomponente wird eine Integritätsstufe zugordnet und dem Anforderungssignal eine Mindestintegritätsstufe. Ist die Mindestintegritätsstufe kleiner als die Integritätsstufe der Fahrzeugkomponente, wird das Anforderungssignal ignoriert.

Der Erfindung liegt die Aufgabe zugrunde, in einem Kraftfahrzeug ein Sicherheitskonzept bereitzustellen, durch welches eine Fehlauslösung eines Abbremsvorgangs durch ein Fahrassistenzsystem vermieden werden kann.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung wird ein Verfahren zum Steuern einer Verzögerungseinrichtung eines Kraftfahrzeugs bereitgestellt. Das Verfahren wird durch eine Steuervorrichtung durchgeführt, die beispielsweise als Bremssteuergerät realisiert sein kann. In der beschriebenen Weise empfängt die Steuervorrichtung zu Beginn oder während eines Abbremsvorgangs, bei welchem die Verzögerungseinrichtung eine Abbremsung oder Fahrzeugverzögerung bewirkt, ein Anforderungssignal einer Fahrzeugkomponente für die Fahrzeugverzögerung. Das Anforderungssignal kann beispielsweise einen Bremsmoment angeben, mit welchem abgebremst werden soll. Das Anforderungssignal kann auch beispielsweise einen Beschleunigungswert angeben, der eine negative Beschleunigung, das heißt eine Verzögerung, angibt. Beispielsweise kann ein Bremsmoment mittels einer Reibbremse erzeugt werden, die Bestandteil der Verzögerungseinrichtung sein kann. Durch die Steuervorrichtung soll in der Verzögerungseinrichtung die Fahrzeugverzögerung gemäß dem Anforderungssignal eingestellt werden.

Um nun sicherzustellen, dass das Anforderungssignal der Fahrzeugkomponente einen plausiblen Abbremsvorgang ergibt, also keine Falschanforderung aufgrund eines technischen Defekts oder einer Fehlerkennung oder Fehlinterpretation der Fahrsituation ist, sind folgende zusätzliche Schritte vorgesehen. Durch die Steuervorrichtung wird eine Integritätsstufe der Fahrzeugkomponente ermittelt. Beispielsweise kann also der beschriebe ASIL oder Integritätslevel ermittelt werden. Des Weiteren wird während des Abbremsvorgangs ein Zeitverlauf einer sich durch die Fahrzeugverzögerung ergebenden Verzögerungsperformanz der Verzögerungseinrichtung ermittelt. Die Verzögerungsperformanz gibt an, welche Auswirkung die Verzögerungseinrichtung bisher während des Abbremsvorgangs auf die Fahrgeschwindigkeit des Kraftfahrzeugs ausgeübt hat. Die Steuervorrichtung ermittelt immer wieder, das heißt für unterschiedliche Zeitpunkte, jeweils für den bis zu dem jeweiligen Zeitpunkt ermittelten Zeitverlauf eine aktuelle, mindestens notwendige Mindestintegritätsstufe. Mit anderen Worten wird überprüft, welche Mindestintegritätsstufe eine Fahrzeugkomponente haben muss, damit sie mittels ihres Anforderungssignals den weiteren Abbremsvorgang weiterführen oder beeinflussen darf. Falls die aktuelle Mindestintegritätsstufe größer als die Integritätsstufe der Fahrzeugkomponente ist, wird für das Anforderungssignal der Fahrzeugkomponente eine Performanzbegrenzung durchgeführt. Die Performanzbegrenzung betrifft somit die Verzögerungsperformanz, die der Fahrzeugkomponente bereitgestellt wird. Mit anderen Worten kann die Fahrzeugkomponente mit ihrer Integritätsstufe die Fahrzeugverzögerung nur innerhalb eines vorgegebenen Performanzbereichs einstellen oder anfordern, wobei der Performanzbereich durch aktuelle Mindestintegritätsstufe definiert ist. Falls die Integritätsstufe der Fahrzeugkomponente dagegen mindestens der Mindestintegritätsstufe entspricht, kann in der Verzögerungseinrichtung die Fahrzeugverzögerung gemäß dem Anforderungssignal eingestellt werden.

Durch die Erfindung ergibt sich der Vorteil, dass in der Steuervorrichtung eine komponentenübergreifende Überprüfung des umgesetzten oder verwendeten Anforderungssignals durchgeführt wird, sodass hier ein unplausibles oder unwahrscheinliches Anforderungssignal erkannt wird. Das Anforderungssignal ist dann unplausibel, also ein Hinweis auf einen Defekt oder eine Fehlerkennung innerhalb der Fahrzeugkomponente, falls durch das Anforderungssignal ein Zeitverlauf der Verzögerungsperformanz bewirkt wird, der durch die Fahrzeugkomponente gemäß ihrer Integritätsstufe gar nicht ausgelöst oder verursacht werden darf. Die Mindestintegritätsstufe stellt auch eine Einschätzung der aktuellen Fahrsituation dar, wie sie durch die Steuervorrichtung anhand des Zeitverlaufes der Verzögerungsperformanz ermittelt oder ausgewertet wird. Die Mindestintegritätsstufe gibt dabei an, wie kritisch der bisherige Verlauf des Abbremsvorgangs war. Fahrzeugkomponenten mit niedrigerer Integritätsstufe dürfen dann in einen schon kritischen Abbremsvorgang nicht mehr eingreifen.

Das genannte Anforderungssignal kann ein einzelner Steuerwert sein, also beispielsweise ein Auslösebefehl für eine Vollbremsung. Das Anforderungssignal kann aber auch ein Zeitsignal sein, welches über der Zeit für unterschiedliche Zeitpunkte jeweils einen neu einzustellenden Wert für die Fahrzeugverzögerung angibt.

Zu der Erfindung gehören auch optionale Weiterbildungen, durch deren Merkmale sich zusätzliche Vorteile ergeben.

Gemäß einer Weiterbildung umfasst die Performanzbegrenzung, dass das Anforderungssignal ignoriert wird oder der Zeitverlauf der Verzögerungsperformanz auf eine durch die Integritätsstufe der Fahrzeugkomponente vorgegebene Performanzgrenze begrenzt wird, indem die durch das Anforderungssignal angeforderte Fahrzeugverzögerung verringert und nur die verringerte Fahrzeugverzögerung in der Verzögerungseinrichtung eingestellt wird, falls die durch das Anforderungssignal angeforderte Fahrzeugverzögerung die Performanzgrenze übersteigt. Das Anforderungssignal wird insbesondere dann ignoriert, falls der Abbremsvorgang durch eine andere Fahrzeugkomponente eingeleitet wurde, z.B. durch ein vom Fahrer betätigtes Bremspedal. Falls der bisherige Zeitverlauf bereits durch die Fahrzeugkomponente verursacht wurde und/oder kein anderes Anforderungssignal vorliegt, kann das Anforderungssignal der Fahrzeugkomponente in der beschriebenen Weise verringert und in der Verzögerungseinrichtung die Fahrzeugverzögerung gemäß dem verringerten Anforderungssignal eingestellt werden.

Die beschriebene Verzögerungsperformanz kann beispielsweise einen Verzögerungswert umfassen, das heißt eine negative Beschleunigung. Bei einer Weiterbildung umfasst die Verzögerungsperformanz einen Geschwindigkeitsabbau der Fahrgeschwindigkeit des Kraftfahrzeugs seit Beginn des Zeitverlaufs. Mit anderen Worten wird ermittelt, um welchen Geschwindigkeitswert sich die Fahrgeschwindigkeit seit Beginn des Zeitverlaufs verringert hat. Es handelt sich also um einen akkumulierten Geschwindigkeitsabbau. Durch diese Weiterbildung ergibt sich der Vorteil, dass unabhängig von zwischenzeitlichen Verzögerungswerten nur die insgesamt bewirkte, also effektive Geschwindigkeitsreduktion erfasst wird. Der Geschwindigkeitsabbau kann beispielsweise auf der Grundlage von Geschwindigkeitswerten ermittelt werden, die anhand beispielsweise von Raddrehzahlen oder Radarsignalen in an bekannter Weise ermittelt werden kann.

Gemäß einer Weiterbildung gibt die Integritätsstufe eine Fehlerwahrscheinlichkeit für eine fehlerhafte Erzeugung des Anforderungssignals an. Eine solche Integritätsstufe ist beispielsweise durch den bereits beschriebenen ASIL angegeben. Die Integritätsstufe stellt somit also eine Sicherheitsstufe oder Zuverlässigkeitsstufe dar. Zum Ermitteln der Integritätsstufe der Fahrzeugkomponente kann beispielsweise vorgesehen sein, dass in der Steuervorrichtung eine Liste oder Tabelle hinterlegt ist, durch welche der Fahrzeugkomponente ihre Integritätsstufe zugeordnet ist. Die Fahrzeugkomponente kann beispielsweise anhand ihrer Senderadresse, die sie beim Aussenden des Anforderungssignals verwendet, identifiziert werden. Alternativ dazu kann für eine oder mehrere oder alle Fahrzeugkomponenten vorgesehen sein, dass diese jeweils ihre Integritätsstufe zusammen mit dem Anforderungssignal aussendet. Hierdurch ergibt sich der Vorteil, dass sich die Integritätsstufe der Fahrzeugkomponente über der Zeit ändern kann. Beispielsweise kann die Fahrzeugkomponente ihre Integritätsstufe in Abhängigkeit davon einstellen, wie zuverlässig sie eine Fahrsituation oder Verkehrssituation erkennen oder einstufen oder bewerten konnte. Dies kann beispielsweise in bekannter Weise in Abhängigkeit von Erkennungswahrscheinlichkeiten festgelegt werden.

Eine Weiterbildung betrifft das Ermitteln der Mindestintegritätsstufe. Bei dieser Weiterbildung wird für mehrere vorgegebenen Mindestintegritätsstufen jeweils eine Kennlinie für den Zeitverlauf der Verzögerungsperformanz vorgegeben. Diese Kennlinie stellt zu den genannten Zeitpunkten jeweils die höchst zulässige Verzögerungsperformanz dar. Es kann also beispielsweise für unterschiedliche ASIL-Werte jeweils eine Kennlinie vorgegeben werden, also beispielsweise eine Kennlinie für ASIL-A, ASIL-B und ASIL-C. Aus den Mindestintegritätsstufen wird dann diejenige als aktuelle Mindestintegritätsstufe ausgewählt, deren Kennlinie der ermittelte Zeitverlauf zuletzt überschritten hat. Übersteigt also der ermittelte Zeitverlauf den höchst zulässigen Wert für die Verzögerungsperformanz, die eine der Kennlinien angibt, so wird als Mindestintegritätsstufe diejenige eingestellt oder ausgewählt, die dieser Kennlinie zugeordnet ist. Durch diese Weiterbildung ergibt sich der Vorteil, dass durch die Kennlinien jeweils eine Zeitabhängigkeit beschrieben werden kann.

Gemäß einer Weiterbildung ist eine Hysterese beim Herunterstufen oder Verringern der Mindestintegritätsstufe vorgesehen. Bei dieser Weiterbildung wird die aktuelle Mindestintegritätsstufe so lange beibehalten, bis der ermittelte Zeitverlauf die Kennlinie der tieferen Mindestintegritätsstufe unterschritten hat. Daraufhin wird die tiefere Mindestintegritätsstufe als aktuelle Mindestintegritätsstufe ausgewählt. Mit "aktuelle" ist jeweils der Zeitpunkt gemeint, an dem in der beschriebenen Weise der Zeitverlauf ausgewertet wird. Durch die Hysterese ergibt sich der Vorteil, dass die Ausführung oder Umsetzung eines Anforderungssignals einer Fahrzeugkomponente mit einer Integritätsstufe kleiner als die aktuelle Mindestintegritätsstufe verzögert wird, bis sich die Fahrsituation entschärft oder entspannt oder zu einer geringeren Mindestintegritätsstufe hin entwickelt hat.

Gemäß einer Weiterbildung wird während des Abbremsvorgangs ein weiteres Anforderungssignal einer weiteren Fahrzeugkomponente ignoriert, solange die aktuelle Mindestintegritätsstufe größer als eine Integritätsstufe der weiteren Fahrzeugkomponente ist. Mit anderen Worten werden während des Abbremsvorgangs all diejenigen Fahrzeugkomponenten gesperrt, deren Integritätsstufe geringer als die aktuelle Mindestintegritätsstufe ist. Hierdurch ergibt sich der Vorteil, dass Fahrzeugkomponenten mit geringerer Integritätsstufe in einer kritischen Abbremssituation oder während eines kritischen Abbremsvorgangs, der eine höhere Mindestintegritätsstufe erfordert, keine unnötige Verschärfung der Fahrsituation verursachen können. Die Fahrsituation muss sich erst entspannen, bevor diese Fahrzeugkomponenten ebenfalls wieder beachtet oder berücksichtigt werden. Die aktuelle Mindestintegritätsstufe kann in einem Rückkanal durch die Steuervorrichtung den angekoppelten oder verbundenen Fahrzeugkomponenten mitgeteilt oder angezeigt oder signalisiert werden. Hierdurch wird signalisiert, in welchem Perfomanzbereich der Fahrzeugverzögerung oder der Abbremsung sich das Kraftfahrzeug aktuell befindet.

Eine Weiterbildung berücksichtigt, dass während des Abbremsvorgangs eine Fahrzeugkomponente mit ausreichend hoher Integritätsstufe ein Anforderungssignal sendet, das eine größere Fahrzeugverzögerung anfordert als das Anforderungssignal, das aktuell oder momentan durch die Verzögerungseinrichtung umgesetzt wird. Bei dieser Weiterbildung wird während des Abbremsvorgangs aus mehreren empfangenen Anforderungssignalen dasjenige ausgewählt, welches aus einer Fahrzeugkomponente empfangen wird, deren Integritätsstufe mindestens der aktuellen Mindestintegritätsstufe entspricht und für welches sich die größte Fahrzeugverzögerung ergibt. Das ausgewählte Anforderungssignal wird dann in der Verzögerungseinrichtung durch die Steuervorrichtung eingestellt. Hierdurch ergibt sich der Vorteil, dass Fahrzeugkomponenten mit ausreichend großer oder hoher Integritätsstufe sich nicht gegenseitig beim Abbremsen des Kraftfahrzeugs beeinflussen oder behindern.

Gemäß einer Weiterbildung wird die Verzögerungsperformanz nicht bei jedem Abbremsvorgang begrenzt. Die Weiterbildung sieht vor, dass der Zeitverlauf der Verzögerungsperformanz nur begrenzt wird, falls zuvor durch die Fahrzeugverzögerung zumindest einmal ein vorbestimmtes Notbremskriterium erfüllt worden ist. Hierdurch ist die Begrenzung nicht durchgehend aktiv, sondern nur, falls das Notbremskriterium erfüllt worden ist. Hierdurch ergibt sich der Vorteil, dass sanfte oder seichte Abbremsvorgänge nicht unnötig durch die Steuervorrichtung beeinträchtigt werden.

Gemäß einer Weiterbildung umfasst das Notbremskriterium, dass durch die eingestellte Fahrzeugverzögerung ein vorbestimmter Verzögerungswert (das heißt eine negative Beschleunigung) und/oder eine vorbestimmte Verzögerungsänderungsrate (das heißt ein Ruck oder ein Verzögerungsaufbau) überschritten wird. Bevorzugt liegt der Verzögerungswert in einem Intervall von 4 m/s² bis 6 m/s². Die Verzögerungsänderungsrate liegt bevorzugt in einem Intervall von 4 m/s³ bis 6 m/s³. Nach einmaliger Erfüllung des Notbremskriteriums kann dann bis zum Ende des Bremsvorgangs die beschriebene bedingte Begrenzung des Zeitverlaufs beibehalten oder überwacht werden.

Eine Weiterbildung berücksichtigt eine Veränderung der Fahrsituation während des Bremsvorgangs. Bei dieser Weiterbildung wird während des Abbremsvorgangs die Ermittlung des Zeitverlaufs neu begonnen, falls ein vorbestimmtes Neustartereignis erkannt wird. Das Neustartereignis kann beispielsweise umfassen, dass während des Abbremsvorgangs erst nach einiger Zeit, also in einem Zeitabstand zum Beginn des Abbremsvorgangs, das Notbremskriterium erfüllt ist. Es kann auch als Neustartereignis erkannt werden, dass ein Anforderungssignal einer anderen Fahrzeugkomponente empfangen wird, die mittels ihres Anforderungssignals eine größere Fahrzeugverzögerung anfordert als sie aktuell eingestellt ist. Durch die Weiterbildung wird berücksichtigt, dass beim Überwachen des Zeitverlaufs auch der besagten Kennlinien verwendet werden kann, die eine Zeitabhängigkeit der Verzögerungsperformanz berücksichtigt.

Gemäß einer Weiterbildung wird ein Beginn und/oder ein Ende des Abbremsvorgangs anhand eines Aktivitätssignals einer Bremsleuchte und/oder in Abhängigkeit von einem Mindestwert für die Fahrzeugverzögerung erkannt wird. Mit anderen Worten Beginn der Abbremsvorgang mit dem Aufleuchten der Bremsleuchte und endet mit dem Erlöschen der Bremsleuchte. Hierdurch ergibt sich der Vorteil, dass ein von einem Fahrer mittels des Bremspedals begonnener Abbremsvorgang durch das Zeitsignal ebenfalls erfasst wird. Zusätzlich oder alternativ dazu kann vorgesehen sein, dass der Abbremsvorgang in Abhängigkeit von einem Mindestwert für die Fahrzeugverzögerung als begonnen oder beendet gilt. Selbst wenn also ein Fahrer den Fuß auf dem Bremspedal lässt, ohne dass er eine nennenswerte Fahrzeugverzögerung verursacht, wird dies nicht mehr als Teil des Abbremsvorgangs gewertet. Mit beendetem Abbremsvorgang wird bevorzugt keine Mindestintegritätsstufe mehr vorgegeben. Hierdurch ergibt sich der Vorteil, dass bei erneutem oder weiterem oder zukünftigem Empfang eines Anforderungssignals ein Neubeginn eines Abbremsvorgangs erkannt wird.

Wie bereits ausgeführt, gehört zu der Erfindung auch die beschriebene Steuervorrichtung für die Verzögerungseinrichtung des Kraftfahrzeugs. Die Steuervorrichtung ist dazu ausgelegt, eine Ausführungsform des erfindungsgemäßen Verfahrens durchzuführen. Die Steuervorrichtung kann hierzu beispielsweise einen Mikrocontroller oder einen Mikroprozessor aufweisen. Die Steuervorrichtung ist bevorzugt als Bremssteuergerät ausgestaltet.

Schließlich gehört zu der Erfindung auch ein Kraftfahrzeug, in welchem eine Ausführungsform der erfindungsgemäßen Steuervorrichtung bereitgestellt ist. Die Steuervorrichtung ist mit einer Verzögerungseinrichtung zum Einstellen einer Fahrzeugverzögerung und mit zumindest einer Fahrzeugkomponente zum Empfangen eines Anforderungssignals gekoppelt. Mit der zumindest einen Fahrzeugkomponente kann die Steuervorrichtung beispielsweise über einen Kommunikationsbus gekoppelt sein. Bei dem Kommunikationsbus kann es sich beispielsweise um einen CAN-Bus oder einen FlexRay-Bus handeln. Ein Anforderungssignal eines Bremspedals kann von einem Drucksensor am Bremspedal empfangen werden.

Gemäß einer Weiterbildung des Kraftfahrzeugs umfasst die genannte Verzögerungseinrichtung zumindest eine der folgenden Einrichtungen: einen elektrisch steuerbaren Bremskraftverstärker einer Reibbremse, einen Generator zum Rekuperieren von Bewegungsenergie des Kraftfahrzeugs, ein Motorsteuergerät zum Durchführen einer Motorbremsung. Hierdurch ergibt sich der Vorteil, dass durch die Steuervorrichtung für jede der umfassten Einrichtungen überwacht wird, ob das Anforderungssignal plausibel oder zulässig ist.

Gemäß einer Weiterbildung umfasst die zumindest eine Fahrzeugkomponente zumindest eine der folgenden: ein Parkassistenzsystem, eine elektronische Stabilitätskontrolle (ESC - electronic stability control), einen Notbremsassistenten, ein Bremspedal, eine Rekuperationssteuerung für den beschriebenen Generator, einen elektro-mechanischen Bremskraftverstärker (eBKV), eine Multikollisionsbremse zum Auslösen einer Vollbremsung nach einem Primärcrash oder Erstcrash, ein Assistenzsystem für eine autonome Längsführung des Kraftfahrzeugs, eine Warnruckeinrichtung zum Erzeugen eines haptischen Warnsignals an einen Fahrer. Hierdurch ergibt sich in vorteilhafter Weise eine Überwachung dieser Fahrzeugkomponenten auf Fahrzeugebene, das heißt nicht nur innerhalb der jeweiligen Komponente aufgrund ihrer Integritätsstufe, das heißt beispielsweise ihres ASIL. Insbesondere ist hierbei vorgesehen, dass dem Bremspedal eine Integritätsstufe zugeordnet ist, die mindestens der größten oder höchsten Mindestintegritätsstufe entspricht.

Es kann vorgesehen sein, dass eine oder mehrere der beschriebenen Fahrzeugkomponenten nicht direkt mit der Steuervorrichtung kommuniziert, sondern indirekt beispielsweise über eine Komfortbeschleunigungskomponente, die das jeweilige Anforderungssignal der Fahrzeugkomponente weiterleitet. Hierdurch ergibt sich der Vorteil, dass das Einstellen eines Zeitverlaufs des jeweiligen Anforderungssignals durch die Komfortbeschleunigungskomponente gefiltert werden kann. Es kann aber auch vorgesehen sein, dass eine solche Komfortbeschleunigungskomponente durch die jeweilige Fahrzeugkomponente umgangen wird und die Fahrzeugkomponente ihr Anforderungssignal direkt an die Steuervorrichtung sendet, falls beispielsweise eine Fahrgeschwindigkeit des Kraftfahrzeugs kleiner als ein Grenzwert ist. Der Grenzwert kann beispielsweise in einem Intervall von 10 km/h bis 20 km/h liegen, beispielsweise 15 km/h betragen.

Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: ein Diagramm mit Kennlinien zum Ermitteln einer Mindestintegritätsstufe anhand eines Zeitverlaufs einer Verzögerungsperformanz einer Verzögerungseinrichtung des Kraftfahrzeugs,
- Fig. 3: ein Diagramm mit den Kennlinien von Fig. 2 und einem beispielhaften Zeitverlauf für eine Verzögerungsperformanz während eines Bremsvorgangs des Kraftfahrzeugs von Fig. 1

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

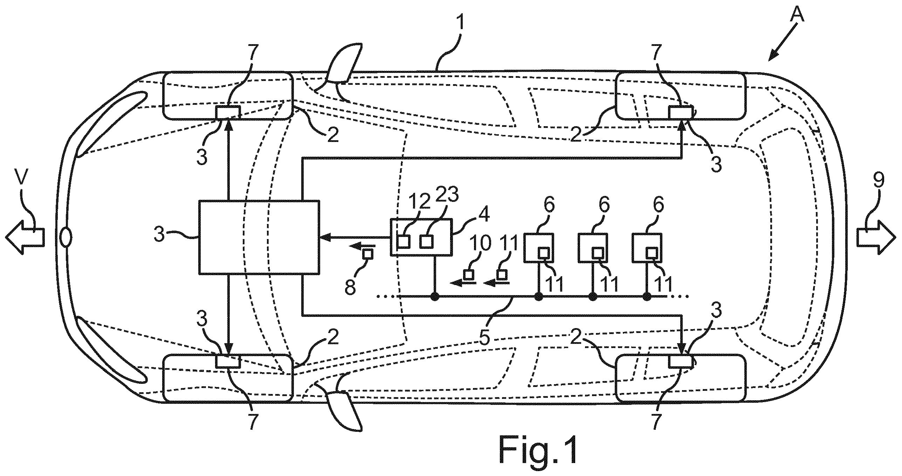

Fig. 1 zeigt aus einer Vogelperspektive ein Kraftfahrzeug 1, bei dem es sich beispielsweise um einen Kraftwagen, insbesondere einen Personenkraftwagen oder Lastkraftwagen, handeln kann. Dargestellt sind Räder 2, eine Verzögerungseinrichtung 3, eine Steuervorrichtung 4, ein Kommunikationsbus 5 und Fahrzeugkomponenten 6. In dem in Fig. 1 gezeigten Beispiel rollt das Kraftfahrzeug 1 mit einer Fahrgeschwindigkeit V in Vorwärtsfahrtrichtung.

Die Verzögerungseinrichtung 3 kann beispielsweise Reibbremsen 7 für jedes Rad 2 umfassen. Des Weiteren kann die Verzögerungseinrichtung 3 beispielsweise auch einen (nicht näher dargestellten) Generator umfassen, der über einen (nicht dargestellten) Antriebsstrang durch die Räder 2 beim Rollen des Kraftfahrzeugs 1 angetrieben werden kann. Bei aktivierter Verzögerungseinrichtung 3 wird eine Fahrgeschwindigkeit des Kraftfahrzeugs 1 verringert, das heißt zum Stillstand hin reduziert. Die Geschwindigkeitsverringerung oder der Geschwindigkeitsabbau muss dabei nicht bis vollständig zum Stillstand hin erfolgen. Die Steuervorrichtung 4 kann ein Steuersignal 8 für die Verzögerungseinrichtung 3 erzeugen.

In Fig. 1 ist ein Abbremsvorgang A dargestellt, bei dem das Kraftfahrzeug 1 mit einer Fahrzeugverzögerung 9 abgebremst wird. Durch die Steuervorrichtung 4 kann hierzu eine Fahrzeugverzögerung 9 eingestellt worden sein, also beispielsweise in Beschleunigungswert oder ein Bremsmoment, durch welches die Fahrgeschwindigkeit V reduziert wird oder der Fahrgeschwindigkeit V entgegengewirkt wird. Der Abbremsvorgang A kann auch zum Beispiel durch eine Betätigung des Bremspedals eingeleitet worden sein.

Die Steuervorrichtung 4 kann beispielsweise als ein Bremssteuergerät ausgestaltet sein. Die Steuervorrichtung 4 stellt mittels des Steuersignals 8 in der Verzögerungseinrichtung 3 die Fahrzeugverzögerung 9 in Abhängigkeit von einem Anforderungssignal 10 ein, das die Steuervorrichtung 4 über den Kommunikationsbus 5 von einer der Fahrzeugkomponenten 6 empfangen kann. Der Kommunikationsbus 5 kann hierzu beispielsweise als CAN-Bus oder FlexRay-Bus ausgestaltet sein. Die jeweilige Fahrzeugkomponente 6 kann beispielsweise als ein Fahrassistenzsystem, FAS, ausgestaltet sein. Es kann aber auch vorgesehen sein, dass ein Fahrassistenzsystem mehrere Programmodule oder Programmfunktionen aufweist, von denen jede eine der Fahrzeugkomponenten 6 darstellt. Jede Fahrzeugkomponente 6 kann jeweils ein Anforderungssignal 10 erzeugen. Bei den Fahrzeugkomponenten kann es sich um die bereits beschriebenen Einrichtungen handeln, also beispielsweise um ein Steuergerät für eine ACC oder ein Parkassistenzsystem oder einen Notbremsassistenten. Auch das besagte Bremspedal stellt eine Fahrzeugkomponente 6 dar, wobei das Anforderungssignal des Bremspedals die durch das Bremspedal angeforderte Fahrzeugsverzögerung beschreibt.

Bei dem Kraftfahrzeug 1 ist dabei sichergestellt, dass selbst für den Fall, dass eine Fahrzeugkomponente 6 ein Anforderungssignal 10 erzeugt, das auf einer Fehlerkennung oder einem technischen Effekt der Fahrzeugkomponente 6 beruht, dennoch nicht die entsprechende Fahrzeugverzögerung 9 eingestellt wird, falls es sich um eine Fahrzeugverzögerung 9 handelt, die eine größere Auswirkung auf die Fahrgeschwindigkeit V hat, als es für die Fahrzeugkomponente 6 zulässig ist. Hierzu ist jeder Fahrzeugkomponente 6 ein Sicherheitswert oder eine Integritätsstufe 11 zugeordnet. Bei der Integritätsstufe 11 kann es sich beispielsweise um einen ASIL handeln, also beispielsweise eine Angabe ASIL-QM, ASIL-A, ASIL-B, ASIL-C oder ASIL-D. Dabei ergibt sich folgende aufsteigende Stufenfolge: ASIL-QM, ASIL-A, ASIL-B, ASIL-C und ASIL-D.

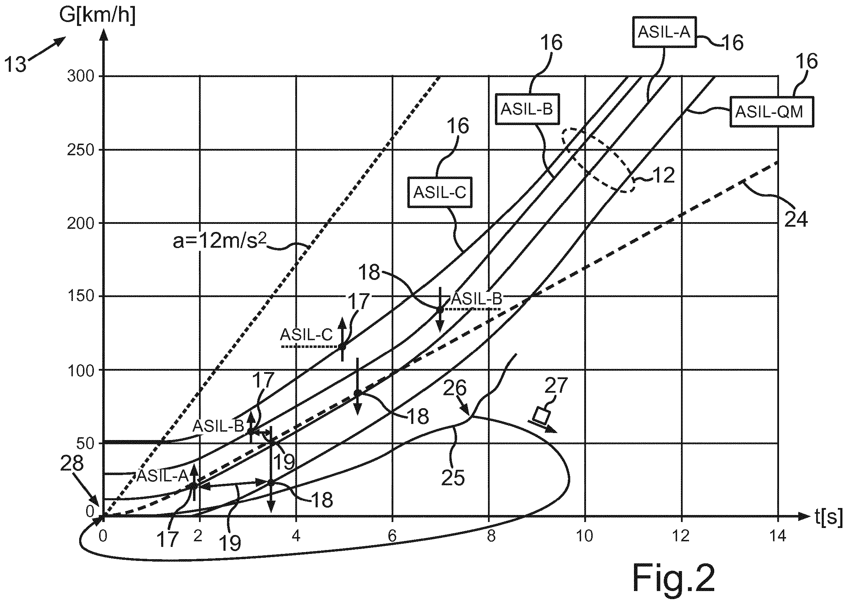

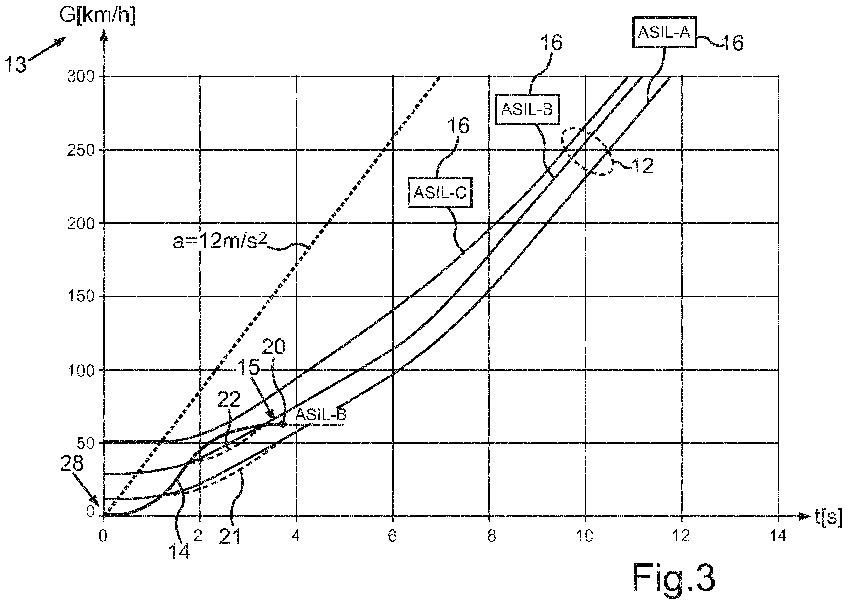

Fig. 2 und Fig. 3 veranschaulichen, wie durch die Steuervorrichtung 4 überprüft wird, ob ein Anforderungssignal einer Fahrzeugkomponente 6 einen zulässigen Abbremsvorgang A verursacht.

Fig. 2 zeigt hierzu Kennlinien 12, durch welche über der Zeit t (dargestellt in Sekunden s) Performanzgrenzen definiert sind, die sich auf eine Verzögerungsperformanz 13 beziehen, die für die unterschiedlichen Integritätsstufen 11 zulässig ist. Für die weitere Erläuterung des Ausführungsbeispiels sei angenommen, dass es sich bei der Verzögerungsperformanz 13 um den Geschwindigkeitsabbau G handelt. Der Geschwindigkeitsabbau G ist in Fig. 2 und Fig. 3 in der Einheit km/h angegeben. Zur besseren Orientierung ist eine Kennlinie für eine Vollbremsung mit einem Geschwindigkeitsabbau bei einer Fahrzeugverzögerung 9 mit einem Wert a = 12 m/s² ebenfalls dargestellt.

In Fig. 3 ist beispielhaft angenommen, dass durch ein Anforderungssignal 10 eine Fahrzeugverzögerung 9 eingestellt wurde, durch die sich nach drei Sekunden ein Geschwindigkeitsabbau, das heißt eine abgebaute Fahrzeuggeschwindigkeit, von 60 km/h ergibt. Danach rollt das Kraftfahrzeug 1 mit einer konstanten Fahrgeschwindigkeit V weiter, wodurch sich ein horizontaler Verlauf 15 des Zeitverlaufs 14 ergibt. Beispielsweise kann das Kraftfahrzeug 1 von 100 km/h auf 40 km/h abgebremst worden sein. Der Geschwindigkeitsabbau G beschreibt somit, um welchen Geschwindigkeitswert die Fahrgeschwindigkeit V seit Beginn einer Erfassung eines Zeitverlaufs 14 (siehe Fig. 3) für den Geschwindigkeitsabbau G verringert worden ist.

Durch die Kennlinie 12 ist jeweils eine Mindestintegritätsstufe 16 vorgegeben, welche die Fahrzeugkomponente 6 aufweisen muss, damit sie mit ihrem Anforderungssignal 10 den Zeitverlauf 14 überhaupt anfordern oder bewirken darf.

In Fig. 2 ist dargestellt, dass bei jeder Überschreitung 17 einer der Kennlinien 12 die zugeordnete Mindestintegritätsstufe 16 eingestellt oder ausgewählt oder vorgegeben wird. Erst bei einem Unterschreiten 18 einer Kennlinie 12 einer niedrigeren Mindestintegritätsstufe 16 wird auf diese Mindestintegritätsstufe 16 zurückgeschaltet. Hierdurch ergibt sich eine Hysterese 19 zwischen den Wechseln der Mindestintegritätsstufen 16. In Fig. 3 ergibt sich somit für den Zeitverlauf nach drei Sekunden im dargestellten horizontalen Verlauf 15 die Mindestintegritätsstufe 16 ASIL-B in dem Auswertezeitpunkt 20.

In Fig. 3 sind des Weiteren alternative Zeitverläufe 21, 22 veranschaulicht. Die Steuervorrichtung 4 begrenzt nämlich den Zeitverlauf 14 in Abhängigkeit von der Integritätsstufe 11 der Fahrzeugkomponente 6, die das Anforderungssignal 10 sendet, falls das Anforderungssignal 10 der Fahrzeugkomponente 6 bisher durch die Steuervorrichtung 4 zum Erzeugen des Steuersignals 8 benutzt wurde. Die Integritätsstufe 11 kann durch die Steuervorrichtung 4 beispielsweise anhand einer Festzuordnung 23 ermittelt werden, die für jede Fahrzeugkomponente 6 ihre Integritätsstufe 11 angibt. Es kann auch vorgesehen sein, dass die Fahrzeugkomponente 6 zusammen mit dem Anforderungssignal 10 ihre Integritätsstufe 11 über den Kommunikationsbus 5 der Steuervorrichtung 4 mitteilt oder übergibt oder bereitstellt.

Falls nun für die Fahrzeugkomponente 6 die Integritätsstufe 11 beispielsweise ASIL-QM angibt, so ergibt sich der alternative Verlauf 21 des Zeitsignals 14. Grund hierfür ist, dass beim Überschreiten 17 der Kennlinie 12 für die Mindestintegritätsstufe 16 gemäß ASIL-A festgestellt wird, dass die Fahrzeugkomponente 6 lediglich eine Integritätsstufe ASIL-QM aufweist, so wird die Fahrzeugverzögerung 9 durch die Steuervorrichtung 4 mittels des Steuersignals 8 begrenzt. Hierdurch wird die Verzögerungsperformanz unterhalb der Kennlinie 12 für ASIL-A gehalten oder begrenzt. Falls die Fahrzeugkomponente 6 als Integritätsstufe 11 die Stufe ASIL-A aufweist, so darf die Verzögerungsperformanz, das heißt der Zeitverlauf 14 für den Geschwindigkeitsabbau G, die Kennlinie 12 für die Mindestintegritätsstufe 16 ASIL-B nicht überschreiten. Entsprechend ergibt sich durch Verringern der Fahrzeugverzögerung 9 der alternative Verlauf 22. Die Kennlinien 12 stellen somit Performanzgrenzen dar, die abhängig von dem Zeitverlauf 14 ausgewählt werden.

Die Performanzgrenzen, das heißt die Kennlinien 12, sind nicht dauerhaft aktiv. Es muss zunächst ein Notbremskriterium 24 erfüllt sein. Das Notbremskriterium 24 ist in Fig. 2 grafisch veranschaulicht. Es kann beispielsweise besagen, dass die Fahrzeugverzögerung 9 größer als 5 m/s² und/oder die Verzögerungsänderung, das heißt das Rucken des Kraftfahrzeugs 1, größer als 5 m/s³ sein muss. Erst dann werden die Kennlinien 12 aktiviert, das heißt die Fahrzeugverzögerung 9 überhaupt begrenzt.

Der Zeitverlauf 14 wird zunächst ab Beginn des Abbremsvorgangs, also mit Aktivieren der Verzögerungseinrichtung 3, erfasst. Beispielsweise kann mit dem Erfassen des Zeitverlaufs 14 begonnen werden, falls ein Aktivitätssignal von Bremslichtern des Kraftfahrzeugs 1 eine Aktivität oder ein Leuchten der Bremslichter signalisiert. In Fig. 2 ist veranschaulicht, wie durch einen Zeitverlauf 25 zunächst bis circa 7,5 Sekunden ein seichter Abbremsvorgang erfolgt, der das Notbremskriterium 24 nicht erfüllt. Beispielsweise durch eine Situationsänderung 26 kann ein Neustartereignis 27 ausgelöst werden, das durch die Steuervorrichtung 4 erkannt werden kann. Beispielsweise kann es sich um einen Anstieg der Fahrzeugverzögerung 9 handeln, der größer als 5 m/s² ist. Dann wird mit der Erfassung des Zeitverlaufs 25 neu begonnen, sodass die Situationsänderung 26 in den Ursprung 28 des Diagramms von Fig. 2 verschoben wird. Die Detektion des Neustartereignisses 27 kann auch auf denjenigen Fall begrenzt sein, dass sich der Zeitverlauf 25 bisher unterhalb der Kennlinie 12 für die Mindestintegritätsstufe 16 ASIL-QM befunden oder aufgehalten hat.

Während eine der Mindestintegritätsstufen 16 eingestellt ist, werden weitere oder andere Anforderungssignale 10 von anderen Fahrzeugkomponenten 6 ignoriert, falls deren Integritätsstufe 11 geringer oder kleiner als die aktuell eingestellte oder ausgewählte Mindestintegritätsstufe 16 ist. Die aktuell ausgewählte Mindestintegritätsstufe 16 kann in einem Rückkanal den Fahrzeugkomponenten 6 angezeigt werden. Durch die Steuervorrichtung 4 wird somit in Abhängigkeit von dem aktuell ermittelten Geschwindigkeitsabbau G und der eingestellten aktuellen Mindestintegritätsstufe 16 die von Fahrzeugkomponenten 6 angeforderte Verzögerung durch die Steuervorrichtung 4 abgebrochen.

Die Steuervorrichtung 4 überwacht somit die Grenzen der Verzögerungsperformanz für jede Fahrzeugkomponente 6, auch bei Überlagerung von mehreren Anforderungssignalen 10 und selbst bei einer Abbremsung durch den Fahrer mittels des Bremspedals. Grundlage hierfür ist die Integritätsstufe 11 der jeweiligen Fahrzeugkomponente 6. Sofern das Kraftfahrzeug 1 durch die Steuervorrichtung 4 in einen vorbestimmten ASIL-Bereich oberhalb einer der Kennlinien 12 verzögert wurde, ist ein Zurückschalten der Verfügbarkeit beispielsweise auf ASIL-QM durch die beschriebene Hysterese 19 erst nach einiger Zeit bei Unterschreiten 18 der entsprechenden Kennlinie 12 abgegrenzt. Da alle Fahrzeugkomponenten mindestens die Integritätsstufe ASIL-QM aufweisen, dient die Kennlinie 12 für die Mindestintegritätsstufe 16 ASIL-QM nur als Rückschaltkriterium zum Einstellen der Mindestintegritätsstufe 16 ASIL-QM. Die Kennlinie kann beispielsweise durch Verschieben der Kennlinie ASIL-A um 0,5 s und um -15 km/h konstruiert werden.

Das beschriebene Sicherheitskonzept gilt auf Fahrzeugebene und sollte auf alle Fahrzeugkomponenten, das heißt Fahrassistenzsysteme oder Assistenzfunktionen, angewendet werden, die verzögern können. Das sind zum einen ESC-interne Fahrzeugkomponenten oder Funktionen und zum anderen die Rekuperation und eine Komfortbeschleunigungsschnittstelle, die wiederum Anforderungssignale anderer Fahrzeugkomponenten empfangen kann, wie beispielsweise einer ACC. Dies sollte im Sicherheitskonzept berücksichtigt werden. Auch weitere zukünftige Bremsfunktionen, die beispielsweise über einen elektronischen Bremskraftverstärker realisiert werden können, sollten durch das Sicherheitskonzept abgesichert werden.

Insgesamt zeigt das Beispiel, wie durch die Erfindung ein generisches Sicherheitskonzept zur Vermeidung von Überbremsen auf Fahrzeugebene bereitgestellt werden kann.

### Bezugszeichenliste

- 1.: Kraftfahrzeug
- 2: Räder
- 3: Verzögerungseinrichtung
- 4: Steuervorrichtung
- 5: Kommunikationsbus
- 6: Fahrzeugkomponenten
- 7: Reibbremse
- 8: Steuersignal
- 9: Fahrzeugverzögerung
- 10: Anforderungssignal
- 11: Integritätsstufe
- 12: Kennlinie
- 13: Verzögerungsperformanz
- 14: Zeitverlauf
- 15: Horizontaler Verlauf
- 16: Mindestintegritätsstufe
- 17: Überschreitung
- 18: Unterschreiten
- 19: Hysterese
- 20: Auswertezeitpunkt
- 21: Alternativer Verlauf
- 22: Alternativer Verlauf
- 23: Festzuordnung
- 24: Notbremskriterium
- 25: Zeitverlauf
- 26: Situationsänderung
- 27: Neustartereignis
- 28: Ursprung
- t: Zeit
- A: Abbremsvorgang
- G: Geschwindigkeitsabbau
- V: Fahrgeschwindigkeit

## Patentansprüche

1. Verfahren zum Steuern einer Verzögerungseinrichtung (3) eines Kraftfahrzeugs (1), wobei durch eine Steuervorrichtung (4) zu Beginn oder während eines Abbremsvorganges, bei welchem die Verzögerungseinrichtung (3) eine Fahrzeugverzögerung bewirkt, ein Anforderungssignal (10) einer Fahrzeugkomponente (6) für die Fahrzeugverzögerung (9) empfangen wird,
**dadurch gekennzeichnet, dass** durch die Steuervorrichtung (4):
- eine Integritätsstufe (11) der Fahrzeugkomponente (6) ermittelt wird,
- während des Abbremsvorgangs (A) ein Zeitverlauf (14, 25) einer sich durch die Fahrzeugverzögerung ergebenden Verzögerungsperformanz (13) der Verzögerungseinrichtung (3) ermittelt wird,
- für unterschiedliche Zeitpunkte jeweils eine für den bis dahin ermittelten Zeitverlauf (14, 25) mindestens notwendige aktuelle Mindestintegritätsstufe (16) ermittelt wird und
- falls die aktuelle Mindestintegritätsstufe (16) größer als die Integritätsstufe (11) der Fahrzeugkomponente (6) ist, für das Anforderungssignal (10) eine Performanzbegrenzung durchgeführt wird.

2. Verfahren nach Anspruch 1, wobei die Performanzbegrenzung umfasst, dass das Anforderungssignal (10) ignoriert wird oder der Zeitverlauf (14, 25) der Verzögerungsperformanz (13) auf eine durch die Integritätsstufe (11) der Fahrzeugkomponente (6)vorgegebene Performanzgrenze begrenzt wird, indem die durch das Anforderungssignal (10) angeforderte Fahrzeugverzögerung (9) verringert und nur die verringerte Fahrzeugverzögerung in der Verzögerungseinrichtung eingestellt wird, falls die durch das Anforderungssignal angeforderte Fahrzeugverzögerung die Performanzgrenze übersteigen würde.

3. Verfahren nach einem der vorhergehenden Ansprüche, wobei die Verzögerungsperformanz (13) einen Geschwindigkeitsabbau (G) der Fahrgeschwindigkeit (V) des Kraftfahrzeugs (1) seit Beginn des Zeitverlaufs (14, 25) umfasst.

4. Verfahren nach einem der vorhergehenden Ansprüche, wobei die Integritätsstufe (11) eine Fehlerwahrscheinlichkeit für eine fehlerhafte Erzeugung des Anforderungssignals (10) angibt.

5. Verfahren nach einem der vorhergehenden Ansprüche, wobei für mehrere vorgegebene Mindestintegritätsstufen (16) jeweils eine Kennlinie (12) für den Zeitverlauf der Verzögerungsperformanz (13) vorgegeben wird und aus den Mindestintegritätsstufen (16) diejenige als aktuelle Mindestintegritätsstufe (16) ausgewählt wird, deren Kennlinie (12) der ermittelte Zeitverlauf (14, 25) zuletzt überschritten (17) hat.

6. Verfahren nach Anspruch 5, wobei die aktuelle Mindestintegritätsstufe (16) solange beibehalten wird, bis der ermittelte Zeitverlauf (14, 25) die Kennlinie (12) einer tieferen Mindestintegritätsstufe (16) unterschritten (18) hat und daraufhin die tiefere Mindestintegritätsstufe (16) als aktuelle Mindestintegritätsstufe (16) ausgewählt wird.

7. Verfahren nach einem der vorhergehenden Ansprüche, wobei während des Abbremsvorgangs (A) aus mehreren empfangenen Anforderungssignalen (10) dasjenige ausgewählt wird, welches aus einer Fahrzeugkomponente (6) empfangen wird, deren Integritätsstufe (11) mindestens der aktuellen Mindestintegritätsstufe (16) entspricht und für welches sich die größte Fahrzeugverzögerung (9) ergibt.

8. Verfahren nach einem der vorhergehenden Ansprüche, wobei der Zeitverlauf (14, 25) der Verzögerungsperformanz (13) nur begrenzt wird, falls zuvor durch die Fahrzeugverzögerung (9) zumindest einmal ein vorbestimmtes Notbremskriterium (24) erfüllt worden ist.

9. Verfahren nach Anspruch 8, wobei das Notbremskriterium (24) umfasst, dass durch die eingestellte Fahrzeugverzögerung (9) ein vorbestimmter Verzögerungswert und/oder eine vorbestimmte Verzögerungsänderungsrate überschritten wird.

10. Verfahren nach einem der vorhergehenden Ansprüche, wobei während des Abbremsvorgangs (A) die Ermittlung des Zeitverlaufs (25) neu begonnen wird, falls ein vorbestimmtes Neustartereignis (27) erkannt wird.

11. Verfahren nach einem der vorhergehenden Ansprüche, wobei ein Beginn und/oder ein Ende des Abbremsvorgangs (A) anhand eines Aktivitätssignals einer Bremsleuchte und/oder in Abhängigkeit von einem Mindestwert für die Fahrzeugverzögerung (9) erkannt wird.

12. Steuervorrichtung (4) für eine Verzögerungseinrichtung (3) eines Kraftfahrzeugs (1), wobei die Steuervorrichtung (4) dazu ausgelegt ist, ein Verfahren nach einem der vorhergehenden Ansprüche durchzuführen.

13. Kraftfahrzeug (1) mit einer Steuervorrichtung (4) nach Anspruch 12, die mit einer Verzögerungseinrichtung (3) zum Einstellen einer Fahrzeugverzögerung und mit zumindest eine Fahrzeugkomponente (6) zum Empfangen eines Anforderungssignals (10) gekoppelt ist.

14. Kraftfahrzeug (1) nach Anspruch 13, wobei die Verzögerungseinrichtung (3) zumindest eine der folgenden Einrichtung umfasst: einen elektrisch steuerbaren Bremskraftverstärker einer Reibbremse (7), einen Generator zum Rekuperieren von Bewegungsenergie des Kraftfahrzeugs, ein Motorsteuergerät zum Durchführen einer Motorbremsung.

15. Kraftfahrzeug (1) nach Anspruch 13 oder 14, wobei die zumindest eine Fahrzeugkomponente (6) zumindest eine der folgenden umfasst: ein Parkassistenzsystem, eine elektronische Stabilitätskontrolle, einen Notbremsassistenten, ein Bremspedal, eine Rekuperationssteuerung, einen elektro-mechanischen Bremskraftverstärker, eine Multikollisionsbremse zum Auslösen eine Vollbremsung nach einem Primärcrash, ein Assistenzsystem für eine autonome Längsführung des Kraftfahrzeugs, eine Warnruckeinrichtung zum Erzeugen eines haptischen Warnsignals an einen Fahrer.

## Claims

1. Method for controlling a deceleration device (3) of a motor vehicle (1), wherein a control apparatus (4), at the beginning of or during a braking process in which the deceleration device (3) prompts vehicle deceleration, receives a request signal (10) from a vehicle component (6) for the vehicle deceleration (9),
**characterized in that** the control apparatus (4):
- ascertains an integrity level (11) of the vehicle component (6),
- ascertains, during the braking process (A), a time profile (14, 25) for deceleration performance (13) of the deceleration device (3) that is obtained as a result of the vehicle deceleration,
- ascertains, for different times, a respective current minimum integrity level (16) that is at least necessary for the time profile (14, 25) ascertained hitherto, and
- performs performance limitation for the request signal (10) if the current minimum integrity level (16) is higher than the integrity level (11) of the vehicle component (6).

2. Method according to Claim 1, wherein the performance limitation comprises the request signal (10) being ignored or the time profile (14, 25) of the deceleration performance (13) being limited to a performance limit prescribed by the integrity level (11) of the vehicle component (6) by virtue of the vehicle deceleration (9) requested by the request signal (10) being decreased and only the decreased vehicle deceleration being set in the deceleration device if the vehicle deceleration requested by the request signal were to exceed the performance limit.

3. Method according to either of the preceding claims, wherein the deceleration performance (13) comprises a speed reduction (G) for the speed of travel (V) of the motor vehicle (1) since the beginning of the time profile (14, 25).

4. Method according to one of the preceding claims, wherein the integrity level (11) indicates a probability of error for erroneous generation of the request signal (10) .

5. Method according to one of the preceding claims, wherein a respective characteristic curve (12) for the time profile of the deceleration performance (13) is prescribed for multiple prescribed minimum integrity levels (16), and of the minimum integrity levels (16), the one whose characteristic curve (12) has been exceeded (17) by the ascertained time profile (14, 25) most recently is selected as the current minimum integrity level (16).

6. Method according to Claim 5, wherein the current minimum integrity level (16) is maintained until the ascertained time profile (14, 25) has dropped below (18) the characteristic curve (12) of a lower minimum integrity level (16), and then the lower minimum integrity level (16) is selected as the current minimum integrity level (16).

7. Method according to one of the preceding claims, wherein during the braking process (A), of multiple received request signals (10), the one selected is the one received from a vehicle component (6) whose integrity level (11) corresponds at least to the current minimum integrity level (16) and the one for which the greatest vehicle deceleration (9) is obtained.

8. Method according to one of the preceding claims, wherein the time profile (14, 25) of the deceleration performance (13) is limited only if the vehicle deceleration (9) has previously satisfied a predetermined emergency braking criterion (24) at least once.

9. Method according to Claim 8, wherein the emergency braking criterion (24) comprises the set vehicle deceleration (9) exceeding a predetermined deceleration value and/or a predetermined rate of deceleration change.

10. Method according to one of the preceding claims, wherein during the braking process (A), the ascertainment of the time profile (25) is begun again if a predetermined restart event (27) is identified.

11. Method according to one of the preceding claims, wherein a beginning and/or an end of the braking process (A) is identified on the basis of an activity signal from a brake light and/or on the basis of a minimum value for the vehicle deceleration (9).

12. Control apparatus (4) for a deceleration device (3) of a motor vehicle (1), wherein the control apparatus (4) is designed to perform a method according to one of the preceding claims.

13. Motor vehicle (1) having a control apparatus (4) according to Claim 12 that is coupled to a deceleration device (3) for setting a vehicle deceleration and to at least one vehicle component (6) for receiving a request signal (10).

14. Motor vehicle (1) according to Claim 13, wherein the deceleration device (3) comprises at least one of the following devices: an electrically controllable braking force booster for a friction brake (7), a generator for recuperating kinetic energy from the motor vehicle, an engine controller for performing engine braking.

15. Motor vehicle (1) according to Claim 13 or 14, wherein the at least one vehicle component (6) comprises at least one of the following: a parking assistance system, an electronic stability control, an emergency braking assistant, a brake pedal, a recuperation controller, an electromechanical braking force booster, a multicollision brake for triggering full braking after a primary crash, an assistance system for autonomous longitudinal guidance of the motor vehicle, a warning jolt device for generating a haptic warning signal for a driver.

## Revendications

1. Procédé permettant de commander un dispositif ralentisseur (3) d'un véhicule automobile (1), dans lequel un dispositif de commande (4) reçoit, au début ou pendant une opération de décélération au cours de laquelle le dispositif ralentisseur (3) provoque un ralentissement de véhicule, un signal de demande (10) d'un composant de véhicule (6) pour le ralentissement de véhicule (9),
**caractérisé en ce que** le dispositif de commande (4) :
- détermine un niveau d'intégrité (11) du composant de véhicule (6),
- détermine pendant l'opération de décélération (A) une courbe de temps (14, 25) d'une performance de ralentissement (13) du dispositif ralentisseur (3) résultant du ralentissement de véhicule,
- détermine pour différents instants respectivement un niveau d'intégrité minimal (16) actuel nécessaire au minimum pour la courbe de temps (14, 25) déterminée jusque là, et
- si le niveau d'intégrité minimal actuel (16) est supérieur au niveau d'intégrité (11) du composant de véhicule (6), effectue une limitation de performance pour le signal de demande (10).

2. Procédé selon la revendication 1, dans lequel la limitation de performance comprend le fait que le signal de demande (10) est ignoré ou la courbe de temps (14, 25) de la performance de ralentissement (13) est limitée à une limite de performance prédéfinie par le niveau d'intégrité (11) du composant de véhicule (6) en ce que le ralentissement de véhicule (9) demandé par le signal de demande (10) est diminué et seul le ralentissement de véhicule diminué est réglé dans le dispositif ralentisseur si le ralentissement de véhicule demandé par le signal de demande dépassait la limite de performance.

3. Procédé selon l'une quelconque des revendications précédentes, dans lequel la performance de ralentissement (13) comprend une perte de vitesse (G) de la vitesse de conduite (V) du véhicule automobile (1) depuis le début de la courbe de temps (14, 25).

4. Procédé selon l'une quelconque des revendications précédentes, dans lequel le niveau d'intégrité (11) indique une probabilité d'erreur pour la production erronée du signal de demande (10).

5. Procédé selon l'une quelconque des revendications précédentes, dans lequel pour plusieurs niveaux d'intégrité prédéfinis (16), respectivement une courbe caractéristique (12) est prédéfinie pour la courbe de temps de la performance de ralentissement (13), et parmi les niveaux d'intégrité minimal (16), on sélectionne celui comme niveau d'intégrité minimal actuel (16) dont la courbe caractéristique (12) a dépassé (17) en dernier la courbe de temps déterminée (14, 25).

6. Procédé selon la revendication 5, dans lequel le niveau d'intégrité minimal actuel (16) est maintenu jusqu'à ce que la courbe de temps (14, 25) déterminée ait soupassé (18) la courbe caractéristique (12) d'un niveau d'intégrité minimal (16) inférieur, et ensuite on sélectionne le niveau d'intégrité minimal (16) inférieur comme niveau d'intégrité minimal actuel (16).

7. Procédé selon l'une quelconque des revendications précédentes, dans lequel, pendant l'opération de décélération (A), on sélectionne parmi plusieurs signaux de demande (10) reçus celui qui est reçu depuis un composant de véhicule (6) dont le niveau d'intégrité (11) correspond au moins au niveau d'intégrité minimal actuel (16) et pour lequel il résulte le plus grand ralentissement de véhicule (9).

8. Procédé selon l'une quelconque des revendications précédentes, dans lequel la courbe de temps (14, 25) de la performance de ralentissement (13) n'est limitée que si le ralentissement de véhicule (9) a auparavant satisfait au moins une fois un critère de freinage d'urgence (24) prédéterminé.

9. Procédé selon la revendication 8, dans lequel le critère de freinage d'urgence (24) comprend le fait que le ralentissement de véhicule (9) réglé dépasse une valeur de ralentissement prédéterminée et/ou un taux de modification de ralentissement prédéterminé.

10. Procédé selon l'une quelconque des revendications précédentes, dans lequel, pendant l'opération de décélération (A), la détermination de la courbe de temps (25) est recommencée si un événement de redémarrage (27) prédéterminé est reconnu.

11. Procédé selon l'une quelconque des revendications précédentes, dans lequel un début et/ou une fin de l'opération de décélération (A) est reconnu(e) à l'aide d'un signal d'activité d'un feu de freinage et/ou en fonction d'une valeur minimale du ralentissement de véhicule (9).

12. Dispositif de commande (4) pour un dispositif ralentisseur (3) d'un véhicule automobile (1), dans lequel le dispositif de commande (4) est conçu pour effectuer un procédé selon l'une quelconque des revendications précédentes.

13. Véhicule automobile (1) comprenant un dispositif de commande (4) selon la revendication 12 qui est couplé à un dispositif ralentisseur (3) pour régler un ralentissement de véhicule, et comprenant au moins un composant de véhicule (6) pour recevoir un signal de demande (10).

14. Véhicule automobile (1) selon la revendication 13, dans lequel le dispositif ralentisseur (3) comprend au moins l'un des équipements suivants: un servofrein à commande électrique d'un frein à friction (7), un générateur pour récupérer de l'énergie cinétique du véhicule automobile, un appareil de commande de moteur pour effectuer un freinage moteur.

15. Véhicule automobile (1) selon la revendication 13 ou 14, dans lequel ledit au moins un composant de véhicule (6) comprend au moins l'un des éléments suivants : un système d'assistance au stationnement, une commande de stabilité électronique, un assistant de freinage d'urgence, une pédale de frein, une commande de récupération, un servofrein électromécanique, un multi-frein de collision pour déclencher un arrêt d'urgence après une collision primaire, un système d'assistance pour un guidage longitudinal autonome du véhicule automobile, un dispositif de secousse d'avertissement pour produire un signal d'avertissement haptique pour un conducteur.
